Europäisches Patentamt

European Patent Office

Office européen des brevets

(11) Veröffentlichungsnummer: **0 089 490**

**A1**

## (12) EUROPÄISCHE PATENTANMELDUNG

(21) Anmeldenummer: **83101468.3**

(22) Anmeldetag: **16.02.83**

(51) Int. Cl.³: **H 01 B 3/44**
**C 08 K 5/05, C 08 K 5/07**
**C 08 L 23/02**

(30) Priorität: **19.03.82 DE 3210139**

(43) Veröffentlichungstag der Anmeldung:
**28.09.83 Patentblatt 83/39**

(84) Benannte Vertragsstaaten:
**GB NL SE**

(71) Anmelder: **Licentia Patent-Verwaltungs-GmbH**
**Theodor-Stern-Kai 1**
**D-6000 Frankfurt/Main 70(DE)**

(72) Erfinder: **Saure, Manfred, Dr. phil.**
**Weissensteinstrasse**
**D-3500 Kassel(DE)**

(72) Erfinder: **Wartusch, Johann, Dipl.-Chem.**
**Am Kaiserberg 13**
**D-3502 Vellmar(DE)**

(74) Vertreter: **Lertes, Kurt, Dr. et al,**
**Licentia Patent-Verwaltungs-GmbH Theodor-Stern-Kai 1**
**D-6000 Frankfurt/M 70(DE)**

(54) **Gegen Hochspannung stabilisierte Isolierung.**

(57) Der elektrische Isolierstoff auf Polyolefinbasis - beispielsweise ein Polyethylen niedriger Dichte, das peroxidisch vernetzt ist - ist mit 0,3 ... 5 Gewichts-% eines Stabilisatorgemisches versehen, das aus einem oder mehreren aliphatischen zweiwertigen Alkoholen mit 4 ... 15 Kohlenstoffatomen und weiterhin flüssigen oder bis 80°C verflüssigbaren aliphatischen oder aliphatisch/aromatischen Verbindungen mit alkoholischen und/oder ketonischen funktionellen Gruppen besteht. Der Isolierstoff zeigt ein verbessertes Langzeitdurchschlagsverhalten, und zwar auch in Gegenwart von Feuchtigkeit; er bietet Schutz gegen "watertrees-Wachstum" und die Entstehung von "electrical trees". Das Stabilisatorgemisch läßt sich gut in das Polyolefin einarbeiten und ist mit ihm auf Dauer verträglich.

Licentia

Patent-Verwaltungs-GmbH

6000 Frankfurt/Main 70, Theodor-Stern-Kai 1

F-Z 80/8
10.11.82

Gegen Hochspannung stabilisierte Isolierung

Die Erfindung betrifft einen mit Spannungsstabilisator versehenen elektrischen Isolierstoff auf Polyolefinbasis.

Die Stabilisierung von Polyethylen-Massen, insbesondere zur Kabelisolierung, gegen zerstörende Einflüsse von elektrischer Hochspannung ist von besonderer Bedeutung. Solche Einflüsse gehen von sogenannten "treeing-Phänomenen" aus und treten zumal bei gleichzeitiger Gegenwart von Feuchtigkeit in der Isolierung auf.

Von den Polyolefin-Homo-und -Copolymerisaten haben die Polyethylene niedriger Dichte inzwischen einen festen Platz in der Kabelisoliertechnik errungen, da sie außer der Preiswürdigkeit und der einfachen Verarbeitbarkeit zu den besten festen Isolierstoffen gehören.

Der Einsatz von Polyethylen in der Hochspannungstechnik, beispielsweise bei Hochspannungskabeln, fand jedoch dadurch eine gewisse Begrenzung, daß die theoretisch mögliche und im Laboratorium an dünnen Proben experimentell meßbare Durchschlagfestigkeit von 600 ... 700 kV/mm sich in der Praxis bei weitem nicht nutzen ließ; man arbeitet dort bei der Auslegung der Kabeldimension noch mit Feldstärkebelastungen, die meist unter 10 kV/mm liegen. Dies hat seine Ursache darin, daß sich bei der technischen Verarbeitung bzw. bei der materialeigenen Abkühl-Schrumpfung mikroskopische und submikroskopische Schwachstellen nicht vermeiden lassen, die in Form von Lunkern oder Mikrorissen in Erscheinung treten. Ebenfalls ist es technisch nicht immer zu vermeiden, daß auch Fremdstoffe als Verunreinigungen in die Isolation gelangen. Alle diese Störstellen in der Isolation bilden elektrische Schwachstellen, deren negative Auswirkungen zu beheben sind.

Wie neue Erkenntnisse gezeigt haben, wirken sich solche Schwachstellen in Gegenwart von Feuchtigkeit, die etwa während der Vernetzung mit Dampf oder im verlegten Zustand aus der Erdfeuchtigkeit in die Isolierung gelangt sind, besonders nachteilig aus; dann gehen nämlich von den Schwachstellen der Isolierung unter dem Einfluß des Wassers und des elektrischen Feldes sogenannte "watertrees" aus. Das sind zunächst mikroskopisch kleine, als Astwerk ("treeing") sichtbare Materialzerstörungen, die sich ausweiten und schließlich (in Form von watertrees oder electrical trees) zu einer Überbrückung der isolierten Elektroden und in der Folge zum Durchschlag führen.

Entgegen den sogenannten "electrical trees" ist die Beobachtung der watertree-Phänomene sehr erschwert, da sie nur mikroskopisch und unter Zuhilfenahme weiterer Hilfsmittel erkennbar sind.

Gegen diese "watertrees", die als Folge von Feuchtigkeit in der Isolierung auftreten, und die dadurch ausgelöste Materialzerstörung wurden bisher noch sehr wenige Stabilisierungsmöglichkeiten gefunden. Die für die elektrische Spannungsstabilisierung gefundenen Stoffe erwiesen sich in diesem Falle als nicht oder nur begrenzt wirksam. So ist z. B. die Verwendung von anorganischen Salzen (H. Matsuba et al. "Watertree mechanism and ists suppression" IEEE 1976, Montreal bzw. DE-OS 25 37 283), von Bleistearat (DE-OS 24 25 760) sowie Oligomeren bzw. gepfropftem Polyethylen (R. M. Eichhorn "Permanent inhibition of watertree growth in polyethylene" IEEE 1979, New York) als Stabilisator gegen "watertrees" bekannt geworden. Es wurde auch schon berichtet, daß in Kabelisoliermassen längerkettige einwertige Alkohole Verwendung finden (DE-OS 27 34 071 und E. J. McMahon, "A tree growth inhibiting insulation for power cable", IEEE-Transactions 1980).

Die bekannten Stabilisator-Zusätze weisen jedoch in der einen oder anderen Richtung Nachteile auf. Entweder lassen sie sich in die zu verwendenden Isoliermischungen schlecht einmischen, sind in dieser auf Dauer zu unverträglich, haben eine zu geringe Migrationsgeschwindigkeit zu den in der Isolation zu schützenden Schwachstellen, diffundieren aus dem Isolierstoff zu schnell aus, stören die Vernetzung oder haben - verglichen mit dem unstabilisierten Vergleichsmaterial - keinen hinreichend hohen Schutzfaktor gleichzeitig gegen das watertree-Wachstum und gegen die Entstehung von electrical trees.

Der vorliegenden Erfindung liegt die Aufgabe zugrunde, eine in Gegenwart von Feuchtigkeit gegen Spannungsbeanspruchung bei Raumtemperatur sowie bei erhöhten Temperaturen stabilisierte Polyolefinisolierung für Hochspannungszwecke zu schaffen, welche die Vernetzung nicht stört, eine verbesserte Beständigkeit gegen watertreeing und electrical treeing und damit ein verbessertes Langzeitdurchschlagverhalten zeigt und darüber hinaus die zuvor beschriebenen Nachteile nicht aufweist.

Diese Aufgabe wird bei einem mit Spannungsstabilisator versehenen elektrischen Isolierstoff auf Polyolefinbasis erfindungsgemäß dadurch gelöst, daß der Isolierstoff ein Stabilisatorgemisch enthält, bestehend aus einem oder mehreren aliphatischen zweiwertigen Alkoholen mit 4 ... 15 Kohlenstoffatomen und weiterhin flüssigen oder bis etwa 80°C verflüssigbaren aliphatischen oder aliphatisch/aromatischen Verbindungen mit alkoholischen und/oder ketonischen funktionellen Gruppen.

Vorzugsweise enthält die Stabilisatorkombination einen zweiwertigen Alkohol mit 4 ... 6 Kohlenstoffatomen oder ein Gemisch von solchen Alkoholen.

Die zu verwendende Menge des Stabilisators richtet sich in ihrer Dosierung nach dem erwarteten Stabilisierungseffekt, insbesondere hinsichtlich der Langzeitstabilisierung, sowie nach der Verträglichkeit in dem jeweiligen Isolierstoff. Dabei hat sich bewährt, daß der Anteil des Stabilisators 0,3 ... 5 Gewichts-%, vorzugsweise 1 ... 3 Gewichts-%, beträgt. Die Alkohole können flüssig oder verflüssigbar sein. Die weiteren Zusätze bestehen aus bei Raumtemperatur flüssigen oder bis 80 °C schmelzenden aliphatischen aromatischen oder gemischtsubstituierten Keto- und/oder Hydroxylverbindungen, z. B. Isopropanolbenzol, Acetophenon, 1,3- oder 1,4-Diacetylbenzol, 1,3- oder 1,4-Diisopropanolbenzol oder 1,3- oder 1,4-Acetylisopropanolbenzol. Durch diese Kombination ist gewährleistet, daß bereits beim Einschalten des Kabels ein migrationsfähiger, flüssiger Stabilisator zur Verfügung steht, aber andererseits auch ein bei Betriebstemperatur wirksam werdender Stabilisator durch Aufschmelzen zur Verfügung gehalten wird.

Es erwies sich als vorteilhaft, dem Stabilisator zusätzlich einen Aminoalkohol, insbesondere 4-Methyl-4-Aminopentanol, zuzufügen, dessen Anteil 0,3 ... 5 Gewichts-%, vorzugsweise 1 ... 3 Gewichts-%, beträgt.

Eine weitere vorteilhafte Ausgestaltung der Erfindung wird dadurch erreicht, daß der Isolierstoff zusätzlich einen Ketosäureester, beispielsweise Acetessigsäureethylester, Acetessigsäure-n-propylester oder Acetessigsäureisopropylester, mit einem Anteil von 0,3 ... 5 Gewichts-%, vorzugsweise 1 ... 3 Gewichts-%, enthält. Dieser soll neben einer Wachstumshemmung von watertrees insbesondere das Entstehen von electrical trees aus watertrees behindern.

Das Polyethylen, vorzugsweise ein Polyethylen niedriger Dichte ($D = 0,918$ g/cm$^3$), kann sowohl peroxidisch als auch mit einem Silan vernetzt werden. Wenn peroxidisch vernetzt wird, kann Dicumylperoxid, insbesondere aber Bis-[tertiär-butyl-isopropyl-benzol] sowie ein Gemisch aus beiden verwendet werden.

Der Isolierstoff gemäß der Erfindung zeigt gegenüber unstabilisiertem Material erheblich verbesserte Eigenschaften, wie Wachstumsuntersuchungen der "watertrees" bewiesen.

Mit einer vernetzten Isoliermischung nach dieser Erfindung wurden gegenüber kommerziellem, nicht stabilisiertem, vernetztem Polyethylen nach einer Temperung bei 80 $^\circ$C folgende Daten ermittelt:

watertree-Wachstum bei 80 $^\circ$C $<$100 μm bei stabilisiertem VPE

$>$300 μm bei nicht stabilisiertem VPE

electrical tree-Einsatzspannung bei 80 $^\circ$C $\geq$18 kV bei stabilisiertem VPE

8 kV bei nicht stabilisiertem VPE

Diese Angaben zeigen, daß mit den erfindungsgemäßen Stabilisatoren die treeing-Beständigkeit eines Kabelisolierstoffs erheblich erhöht wird, womit eine verbesserte elektrische Langzeitfestigkeit von Kabelisolierungen unter erschwerten Bedingungen erreicht werden kann.

Um speziell die besonders gefährdeten Isolationsgrenzflächen zu schützen, hat es sich als zweckmäßig erwiesen, auch die halbleitenden Polymer-Schirme mit den Stabilisatoren nach der Erfindung auszurüsten.

6

Licentia

Patent-Verwaltungs-GmbH

6000 Frankfurt/Main 70, Theodor-Stern-Kai 1

F-Z 80/8
10.11.82

## Gegen Hochspannung stabilisierte Isolierung

## Patentansprüche

1. Mit Spannungsstabilisator versehener elektrischer Isolierstoff auf Polyolefinbasis, **dadurch gekennzeichnet,** daß der Isolierstoff ein Stabilisatorgemisch enthält, bestehend aus einem oder mehreren aliphatischen zweiwertigen Alkoholen mit 4 ... 15 Kohlenstoffatomen und weiterhin flüssigen oder bis etwa 80 $^{\circ}$C verflüssigbaren aliphatischen oder aliphatisch/aromatischen Verbindungen mit alkoholischen und/oder ketonischen funktionellen Gruppen.

2. Isolierstoff nach Anspruch 1, **dadurch gekennzeichnet,** daß er in der Stabilisatorkombination einen zweiwertigen Alkohol mit 4 ... 6 Kohlenstoffatomen oder ein Gemisch von solchen Alkoholen enthält.

3. Isolierstoff nach Anspruch 1 bis 3, **dadurch gekennzeichnet,** daß die Alkohole flüssig oder bis 80 $^{\circ}$C verflüssigbar sind.

4. Isolierstoff nach Anspruch 1 bis 3,
   d a d u r c h  g e k e n n z e i c h n e t ,
   daß der Anteil des Stabilisators 0,3 ... 5 Gewichts-% beträgt.


5. Isolierstoff nach Anspruch 1 bis 4,
   d a d u r c h  g e k e n n z e i c h n e t ,
   daß er in der Stabilisatorkombination $\alpha,\alpha$-Dimethylbenzylalkohol,
   Acetophenon, Benzophenon, 1,4-Diacetylbenzol, 1,3-Diacetylbenzol,
   1,4-Diisopropanolbenzol, 1,3-Diisopropanolbenzol oder 1-Acetyl-4-
   isopropanolbenzol bzw. 1-Acetyl-3-isopropanolbenzol allein oder im
   Gemisch enthält.


6. Isolierstoff nach Anspruch 1 bis 5,
   d a d u r c h  g e k e n n z e i c h n e t ,
   daß $\alpha,\alpha$-Dimethylbenzylalkohol, Acetophenon, Benzophenon, 1,4-
   Diacetylbenzol, 1,3-Diacetylbenzol, 1,4-Diisopropanolbenzol, 1,3-
   Diisopropanolbenzol oder 1-Acetyl-4-isopropanolbenzol bzw. 1-Acetyl-
   3-isopropanolbenzol in Mengen von 0,5 ... 3 Gewichts-% enthalten
   sind.


7. Isolierstoff nach Anspruch 1,
   d a d u r c h  g e k e n n z e i c h n e t ,
   daß er in der Stabilisatorkombination einen Aminoalkohol enthält.


8. Isolierstoff nach Anspruch 1 und 7,
   d a d u r c h  g e k e n n z e i c h n e t ,
   daß er 4-Methyl-4-Aminopentanol enthält.


9. Isolierstoff nach Anspruch 1 und 7 bis 8,
   d a d u r c h  g e k e n n z e i c h n e t ,
   daß der Anteil des Aminoalkohols 0,3 ... 3 Gewichts-% beträgt.


10. Isolierstoff nach Anspruch 1 bis 9,
    d a d u r c h  g e k e n n z e i c h n e t ,
    daß er einen Ketosäureester enthält.

11. Isolierstoff nach Anspruch 1 bis 10,

d a d u r c h   g e k e n n z e i c h n e t ,

daß er Acetessigsäureethylester, Acetessigsäurepropylester oder
Acetessigsäureisopropylester enthält.

12. Isolierstoff nach Anspruch 1 bis 11,

d a d u r c h   g e k e n n z e i c h n e t ,

daß er 0,3 ... 5 Gewichts-% Ketosäureester enthält.

13. Isolierstoff nach Anspruch 1 bis 12,

d a d u r c h   g e k e n n z e i c h n e t ,

daß als Polyolefin ein Polyethylen niedriger Dichte (D = 0,918
g/cm$^3$) verwendet wird.

14. Isolierstoff nach Anspruch 1 bis 13,

d a d u r c h   g e k e n n z e i c h n e t ,

daß ein peroxidisch vernetztes Polyethylen verwendet wird.

15. Isolierstoff nach Anspruch 1 bis 14,

d a d u r c h   g e k e n n z e i c h n e t ,

daß ein Polyethylen verwendet wird, das mit Dicumylperoxid vernetzt
ist.

16. Isolierstoff nach Anspruch 1 bis 14,

d a d u r c h   g e k e n n z e i c h n e t ,

daß ein Polyethylen verwendet wird, das mit Bis-[tertiär-butyl-
peroxiisopropyl-benzol] vernetzt ist.

17. Isolierstoff nach Anspruch 1 bis 13,

d a d u r c h   g e k e n n z e i c h n e t ,

daß ein Polyethylen verwendet wird, das mit einem Gemisch aus Dicumylperoxid und Bis-[tertiär-butyl-peroxi-isopropyl-benzol]
vernetzt ist.

18. Isolierstoff nach Anspruch 1 bis 13,

d a d u r c h   g e k e n n z e i c h n e t ,

daß ein Polyethylen verwendet wird, das mit Silan vernetzt ist.

19. Verwendung von Stabilisatoren nach Anspruch 1 bis 12,

d a d u r c h   g e k e n n z e i c h n e t ,

daß sie im halbleitenden Polymer-Schirmmaterial von Hochspannungs-kabeln verwendet werden.

Europäisches
Patentamt

**0089490**
Nummer der Anmeldung

**EUROPÄISCHER RECHERCHENBERICHT**

EP 83 10 1468

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 024 162 (DU PONT) <br> * Anspruch 1 * <br><br> --- | 1 | H 01 B 3/44 <br> C 08 K 5/05 <br> C 08 K 5/07 <br> C 08 L 23/02 |
| A | DE-A-2 837 311 (LICENTIA) <br> * Ansprüche 1,6 * <br><br> --- | 1 | |
| A | DE-A-2 837 358 (LICENTIA) <br> * Anspruch 1 * <br><br> ----- | 1 | |
| | | | RECHERCHIERTE SACHGEBIETE (Int. Cl. ³) <br><br> C 08 K <br> C 08 L <br> H 01 B |

Der vorliegende Recherchenbericht wurde für alle Patentansprüche erstellt.

| Recherchenort <br> DEN HAAG | Abschlußdatum der Recherche <br> 27-06-1983 | Prüfer <br> HOFFMANN K.W. |
|---|---|---|